# EUROPEAN PATENT APPLICATION

(11) **EP 4 183 684 A1**
(43) Date of publication of application: **24.05.2023**
(21) Application number: 22208624.1
(22) Date of filing: 21.11.2022
(51) Int. Cl.: B64D 11/00, B64D 11/06

(54) **ONBOARD WORKSTATIONS FOR AIRCRAFT**

(30) Priority: 20.11.2021 IN 202141053469; 22.06.2022 US 202217847067
(71) Applicant: B/E Aerospace, Inc., Winston-Salem, NC 27105 (US)
(72) Inventor: KODATI, Sambasiva Rao, 521333 Kaikalur, Krishna District (IN); KOUSTUBHAN, Arjun, 500091 Hyderabad (IN); GUDLA, Chandra Sekhar, 500090 Hyderabad (IN)
(74) Representative: Dehns

(57) **Abstract**

An aircraft workstation is disclosed that includes a table (352) that is movable between a stowed position and a deployed position. In one implementation the workstation is incorporated by an aircraft within an exit row. Access to the workstation may be controlled by a latch that locks the table it is stowed position. The workstation may also include a power switch, one or more power sockets, and wire management. The table (352) may incorporate one or more accessories, such as a cupholder, a mouse extender, a table extender, and a stand.

## Description

### CROSS-REFERENCE TO RELATED APPLICATIONS

This application claims priority to, and the benefit of, India Provisional Patent Application No. 202141053469, filed November 20, 2021 (DAS Code F2A4) and titled "ONBOARD WORKSTATIONS FOR AIRCRAFT."

### FIELD

The present disclosure generally relates to the field of aircraft and, more particularly, to workstations on aircraft.

### BACKGROUND

Aircraft will typically include a tray table that is disposed on the back side of a passenger seat. A passenger may place food and/or drink on such a tray table. Although these tray tables are oftentimes used as a working surface, including where a laptop or the like may be positioned on the tray table, these tray tables are less than optimal as working surfaces. For instance, these tray tables may be somewhat unstable when used as a working surface for a laptop or the like.

### SUMMARY

An aircraft workstation is presented herein. Both the configuration of such an aircraft workstation and the operational characteristics/operation/use of such an aircraft workstation are within the scope of this Summary.

The aircraft workstation includes a table that is movable between a stowed position and a deployed position. In one aspect, the aircraft workstation is incorporated within an exit row or aisle of any appropriate aircraft, and as such the table will extend into the exit row when in its deployed position. In another aspect, the aircraft workstation includes at least one latch that is disposable in each of a locked configuration (e.g., where the table is in its stowed position) and an unlocked configuration (e.g., where the table is in its deployed position). Access to an unlocking functionality for the aircraft workstation may be controlled/established in any appropriate manner, for instance by a carrier that operates an aircraft that incorporates the aircraft workstation. A carrier may elect to have only aircraft personnel be able to dispose the latch in its unlocked configuration. However, a carrier may allow an aircraft passenger (or any other individual) to be able to dispose the latch in its unlocked configuration as well.

In another aspect, the table is disposed within a recess of a wall when in its stowed position. At least one power socket, at least one power switch, at least one wire holder (e.g., for wire management), or any combination thereof, may also be disposed in this recess. In another aspect, the table blocks access to at least one power socket of the aircraft workstation when the table is in its stowed position. In another aspect, at least two different pivot pins and at least one torque hinge are used to movably interconnect the table with an aircraft wall, for instance so that the table pivots (e.g., about a single axis) in moving between its stowed and deployed positions.

Each of the above-noted aspects may be used individually and in any combination.

Various aspects of the present disclosure are also addressed by the following examples and in the noted combinations:
1. An aircraft comprising:
   a plurality of passenger seat rows;
   a first exit row (332);
   a first border wall assembly for said first exit row (332); and
   a table movably interconnected with said first border wall assembly, wherein said table is movable between a deployed position where said table extends into said first exit row (332) and a stowed position.
2. The aircraft of example 1, wherein said first border wall assembly comprises a pocket, and wherein said table is disposed within said pocket when said table is in said stowed position.
3. The aircraft of example 2, wherein said first border wall assembly comprises a first power socket disposed within said pocket.
4. The aircraft of any of examples 2-3, wherein said first border wall assembly comprises at least one wire holder disposed within said pocket.
5. The aircraft of any of examples 1-2, wherein said first border wall assembly comprises a first power socket, wherein said table is disposed over said first power socket when said table is in said stowed position.
6. The aircraft of any of examples 1-2 and 5, wherein said first border wall assembly comprises at least one wire holder.
7. The aircraft of any of examples 1-5, further comprising a latch disposable in each of a locked configuration and an unlocked configuration, said latch requiring at least one of a key and an unlocking signal to change said latch from said locked configuration to said unlocked configuration, wherein said table is movable from said stowed position to said deployed position when said latch is in said unlocked configuration.
8. The aircraft of any of examples 1-7, further comprising:
   a stand movably interconnected with said table, wherein said stand is movable from a first stowed position to a first deployed position, wherein said stand is at least substantially coplanar with an upper table surface of said table when in said first stowed position and is disposed at an angle relative to said upper table surface when in said first deployed position.
9. The aircraft of any of examples 1-8 further comprising at least one of:
   a cupholder movably connected with said table;
   a mouse extender movably connected with said table; and
   a table extender movably connected with said table.
10. The aircraft of any of examples 1-7, further comprising:
   first and second wall mounts that are spaced in a first dimension and that are fixed relative to said first border wall assembly;
   first, second, and third table recesses on an upper table surface of said table that are spaced in said first dimension, wherein said first wall mount is disposed in said first table recess and said second wall mount is disposed in said second table recess;
   a first pivot pin that extends in said first dimension through said first wall mount and through portions of said table on each side of said first table recess;
   a second pivot pin that extends in said first dimension through said second wall mount and through portions of said table on each side of said second table recess;
   a first torque hinge comprising a first wall anchor section interconnected with said first border wall assembly and a first table anchor section disposed in said third table recess, wherein said first torque hinge is located between said first wall mount and said second wall mount in said first dimension; and
   a first fastener that extends through said first table anchor section and into said table.
11. The aircraft of example 10, further comprising:
   a fourth table recess on said upper table surface, wherein said fourth table recess is spaced from each of said first table recess, said second table recess, and said third table recess in said first dimension;
   a second torque hinge comprising a second wall anchor section interconnected with said first border wall assembly and a second table anchor section disposed in said fourth table recess, wherein said second torque hinge is located between said first wall mount and said second wall mount in said first dimension; and
   a second fastener that extends through said first table anchor section and into said table.
12. The aircraft of any of examples 1-9, wherein said table comprises first and second supports that are spaced in a first dimension, wherein said first support extends through a first aperture in said first border wall assembly and said second support extends through a second aperture in said first border wall assembly, wherein said aircraft further comprises:
   a first set pin that is positioned on an opposite side of said first border wall assembly compared to said table, wherein said first set pin engages an upper surface of said first support when said table is in said deployed position; and
   a second set pin that is positioned on an opposite side of said first border wall assembly compared to said table, wherein said second set pin engages an upper surface of said second support when said table is in said deployed position.
13. An aircraft comprising:
   a plurality of passenger seat rows;
   a first wall assembly;
   first and second wall mounts that are spaced in a first dimension and that are fixed relative to said first wall assembly;
   a table movably interconnected with said first wall assembly, wherein said table is movable between a stowed position and a deployed position;
   first, second, and third table recesses on an upper table surface of said table that are spaced in said first dimension, wherein said first wall mount is disposed in said first table recess and said second wall mount is disposed in said second table recess;
   a first pivot pin that extends in said first dimension through said first wall mount and through portions of said table on each side of said first table recess;
   a second pivot pin that extends in said first dimension through said second wall mount and through portions of said table on each side of said second table recess;
   a first torque hinge comprising a first wall anchor section interconnected with said first wall assembly and a first table anchor section disposed in said third table recess, wherein said first torque hinge is located between said first wall mount and said second wall mount in said first dimension; and
   a first fastener that extends through said first table anchor section and into said table.
14. The aircraft of example 13, further comprising:
   a fourth table recess on said upper table surface, wherein said fourth table recess is spaced from each of said first table recess, said second table recess, and said third table recess in said first dimension;
   a second torque hinge comprising a second wall anchor section interconnected with said first wall assembly and a second table anchor section disposed in said fourth table recess, wherein said second torque hinge is located between said first wall mount and said second wall mount in said first dimension; and
   a second fastener that extends through said first table anchor section and into said table.
15. The aircraft of any of examples 13-14, wherein said first wall assembly comprises a pocket, and wherein said table is disposed within said pocket when said table is in said stowed position.
16. The aircraft of example 15, wherein said first wall assembly comprises a first power socket disposed within said pocket.
17. The aircraft of any of examples 15-16, wherein said first wall assembly comprises at least one wire holder disposed within said pocket.
18. The aircraft of any of examples 13-14, wherein said first wall assembly comprises a first power socket, wherein said table is disposed over said first power socket when said table is in said stowed position.
19. The aircraft of any of examples 13-14, and 18, wherein said first wall assembly comprises at least one wire holder.
20. The aircraft of any of examples 13-19, further comprising a latch disposable in each of a locked configuration and an unlocked configuration, said latch requiring at least one of a key and an unlocking signal to change said latch from said locked configuration to said unlocked configuration, wherein said table is movable from said stowed position to said deployed position when said latch is in said unlocked configuration.
21. The aircraft of any of examples 13-20, further comprising:
   a stand movably interconnected with said table, wherein said stand is movable from a first stowed position to a first deployed position, wherein said stand is at least substantially coplanar with said upper table surface when in said first stowed position and disposed at an angle relative to said upper table surface when in said first deployed position.
22. The aircraft of any of examples 13-21, further comprising at least one of:
   a cupholder movably connected with said table;
   a mouse extender movably connected with said table; and
   a table extender movably connected with said table.
23. The aircraft of any of examples 13-22, wherein said table comprises first and second supports that are spaced in said first dimension, wherein said first support extends through a first aperture in said first wall assembly and said second support extends through a second aperture in said first wall assembly, wherein said aircraft further comprises:
   a first set pin that is positioned on an opposite side of said first wall assembly compared to said table, wherein said first set pin engages an upper surface of said first support when said table is in said deployed position; and
   a second set pin that is positioned on an opposite side of said first wall assembly compared to said table, wherein said second set pin engages an upper surface of said second support when said table is in said deployed position.
24. An aircraft comprising:
   a plurality of passenger seat rows;
   a first wall assembly;
   a table movably interconnected with said first wall assembly, wherein said table is movable between a stowed position and a deployed position; and
   a latch disposable in each of a locked configuration and an unlocked configuration, said latch requiring at least one of a key and an unlocking signal to change said latch from said locked configuration to said unlocked configuration, wherein said table is movable from said stowed position to said deployed position when said latch is in said unlocked configuration.
25. The aircraft of example 24, wherein said first wall assembly comprises a pocket, and wherein said table is disposed within said pocket when said table is in said stowed position.
26. The aircraft of example 25, wherein said first wall assembly comprises a first power socket disposed within said pocket.
27. The aircraft of any of examples 25-26, wherein said first wall assembly comprises at least one wire holder disposed within said pocket.
28. The aircraft of example 24, wherein said first wall assembly comprises a first power socket, wherein said table is disposed over said first power socket when said table is in said stowed position.
29. The aircraft of any of examples 24 and 28, wherein said first wall assembly comprises at least one wire holder.
30. The aircraft of any of examples 24-29, further comprising:
   a stand movably interconnected with said table, wherein said stand is movable from a first stowed position to a first deployed position, wherein said stand is at least substantially coplanar with an upper table surface of said table when in said first stowed position and is disposed at an angle relative to said upper table surface when in said first deployed position.
31. The aircraft of any of examples 24-30 further comprising at least one of:
   a cupholder movably connected with said table;
   a mouse extender movably connected with said table; and
   a table extender movably connected with said table.
32. The aircraft of any of examples 24-31, further comprising:
   first and second wall mounts that are spaced in a first dimension and that are fixed relative to said first wall assembly;
   first, second, and third table recesses on an upper table surface of said table that are spaced in said first dimension, wherein said first wall mount is disposed in said first table recess and said second wall mount is disposed in said second table recess;
   a first pivot pin that extends in said first dimension through said first wall mount and through portions of said table on each side of said first table recess;
   a second pivot pin that extends in said first dimension through said second wall mount and through portions of said table on each side of said second table recess;
   a first torque hinge comprising a first wall anchor section interconnected with said first wall assembly and a first table anchor section disposed in said third table recess, wherein said first torque hinge is located between said first wall mount and said second wall mount in said first dimension; and
   a first fastener that extends through said first table anchor section and into said table.
33. The aircraft of example 32, further comprising:
   a fourth table recess on said upper table surface, wherein said fourth table recess is spaced from each of said first table recess, said second table recess, and said third table recess in said first dimension;
   a second torque hinge comprising a second wall anchor section interconnected with said first wall assembly and a second table anchor section disposed in said fourth table recess, wherein said second torque hinge is located between said first wall mount and said second wall mount in said first dimension; and
   a second fastener that extends through said first table anchor section and into said table.
34. The aircraft of any of examples 32-33, wherein said table comprises first and second supports that are spaced in said first dimension, wherein said first support extends through a first aperture in said first wall assembly and said second support extends through a second aperture in said first wall assembly, wherein said aircraft further comprises:
   a first set pin that is positioned on an opposite side of said first wall assembly compared to said table, wherein said first set pin engages an upper surface of said first support when said table is in said deployed position; and
   a second set pin that is positioned on an opposite side of said first wall assembly compared to said table, wherein said second set pin engages an upper surface of said second support when said table is in said deployed position.
35. The aircraft of any of examples 24-31, wherein said table comprises first and second supports that are spaced in a first dimension, wherein said first support extends through a first aperture in said first wall assembly and said second support extends through a second aperture in said first wall assembly, wherein said aircraft further comprises:
   a first set pin that is positioned on an opposite side of said first wall assembly compared to said table, wherein said first set pin engages an upper surface of said first support when said table is in said deployed position; and
   a second set pin that is positioned on an opposite side of said first wall assembly compared to said table, wherein said second set pin engages an upper surface of said second support when said table is in said deployed position.
36. A method of operating a workstation on an aircraft, comprising:
   unlocking said workstation;
   moving a table of said workstation from a stowed position to a deployed position after said unlocking; and
   using said table in said deployed position as a working surface.
37. The method of example 36, wherein said unlocking comprising using at least one of a key and an unlocking signal.
38. The method of any of examples 36-37, wherein said using comprises disposing a portable computer on said table.
39. The method of any of examples 36-38, wherein said moving comprises moving said table into an exit row of said aircraft.
40. The method of any of examples 36-39, wherein using comprises a user being in one of a sitting position or a standing position.

### BRIEF DESCRIPTION OF THE DRAWINGS

The subject matter of the present disclosure is particularly pointed out and distinctly claimed in the concluding portion of the specification. An understanding of the present disclosure may be further facilitated by referring to the following detailed description and claims in connection with the following drawings. While the drawings illustrate various embodiments employing the principles described herein, the drawings do not limit the scope of the claims. Reference to "in accordance with various embodiments" in this Brief Description of the Drawings also applies to the corresponding discussion in the Detailed Description.
Figure 1 is a perspective view of a representative aircraft, in accordance with various embodiments;
Figure 2 is a perspective view of one aircraft workstation having a table in a deployed position and another aircraft workstation with a table in a stowed position, in accordance with various embodiments;
Figure 3A is an enlarged, perspective view of an aircraft workstation, in accordance with various embodiments;
Figure 3B is a block diagram of a latching system that may be used by an aircraft workstation, in accordance with various embodiments;
Figure 4A is an enlarged, perspective view of an interconnection between an aircraft wall and a table of an aircraft workstation that utilizes a pair of torque hinges (in exploded view), in accordance with various embodiments;
Figure 4B is an enlarged, perspective view of an interconnection between an aircraft wall and a table of an aircraft workstation that utilizes a pair of pivot pins (in exploded view), in accordance with various embodiments;
Figure 4C is an enlarged, perspective view of a rear portion of a table for an aircraft workstation that is interconnectable with an aircraft wall, in accordance with various embodiments;
Figure 5 is a side view of an aircraft workstation with a table in a deployed position, in accordance with various embodiments;
Figure 6A is a perspective view of an aircraft workstation having a cupholder in a stowed position, in accordance with various embodiments;
Figure 6B is a perspective view of an aircraft workstation having a cupholder in a deployed position, in accordance with various embodiments;
Figure 7A is a perspective view of an aircraft workstation having a stand and a table extender that are each in a stowed position, in accordance with various embodiments;
Figure 7B is a perspective view of an aircraft workstation having a stand and a table extender that are each in a deployed position, in accordance with various embodiments;
Figure 7C is a cutaway side view schematic showing the stand in its stowed position of Figure 7A, in accordance with various embodiments;
Figure 8A is a schematic (plan view) of an aircraft cabin having a plurality of exit rows, in accordance with various embodiments;
Figure 8B is a schematic (side view) of an aircraft cabin with sit-down workstations in two different exit rows, in accordance with various embodiments;
Figure 8C is a schematic (side view) of an aircraft cabin with stand-up workstations in two different exit rows, in accordance with various embodiments; and
Figure 8D is a perspective view of an aircraft cabin with a pair of stand-up workstations in a front row of a passenger cabin, in accordance with various embodiments.

### DETAILED DESCRIPTION

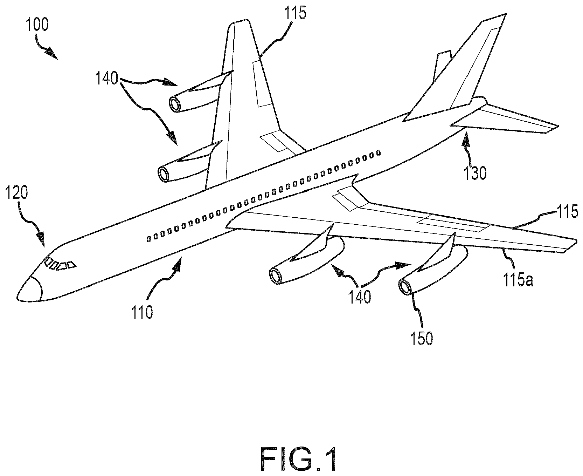

With reference to Figure 1, there is illustrated an example aircraft 100 that may incorporate one or more workstations in accordance with this disclosure. The aircraft 100 includes a fuselage 110 and wings 115. Each wing 115 has a corresponding leading edge 115a (e.g., a "leading" structure/surface of the corresponding wing 115 during movement of the aircraft 100 through the air). The fuselage 110 includes a cockpit 120 and a tailcone 130, which can be substantially integral to the fuselage 110. The aircraft 100 also includes engines 140 which can be affixed to the wings 115 and/or to the fuselage 110, and that may be controlled in any appropriate manner (e.g., by one or more control systems, for example one or more engine control systems). As used herein, the term "engine" is to be understood as including the engines themselves and nacelles 150 which contain the engines. Although shown in Figure 1 generally as a turbofan aircraft in which the engines 140 are gas turbine engines, it should be noted that the aircraft 100 can be any suitable type of aircraft having any suitable number of engines of any suitable type.

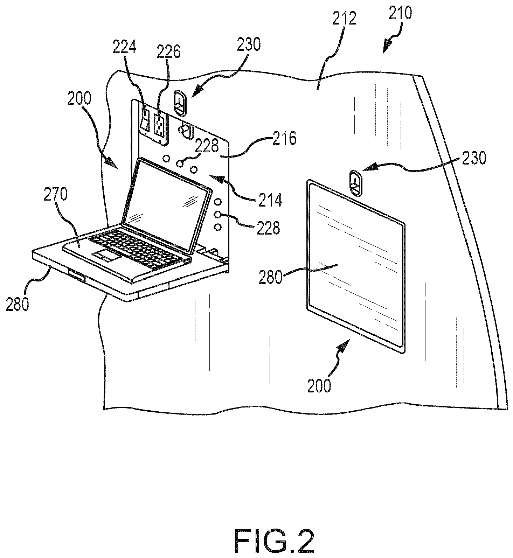

Figure 2 illustrates an aircraft workstation 200 that may be incorporated by any appropriate aircraft and including the aircraft 100 of Figure 1. The aircraft workstation 200 includes a table 280 that is movably (e.g., pivotally) interconnected with a wall assembly 210 of the aircraft. As the wall assembly 210 may be adapted for the table 280, the wall assembly 210 may also be characterized as being part of the workstation 200. In any case one of the aircraft workstations 200 (the left workstation 200 in the view shown in Figure 2) is shown with its table 280 disposed in a deployed position and with a laptop 270 being positioned thereon. Any appropriate portable computer, tablet, other electronics (e.g., mobile phone), or other articles may be disposed on/supported by the table 280 when in its deployed position. The other of the aircraft workstations 200 (the right workstation 200 in the view shown in Figure 2) is shown with its table 280 disposed in a stowed position. The lower or bottom surface of the table 280 may be at least substantially flush with the wall 212 when the table 280 is in its stowed position.

The wall assembly 210 includes a wall 212 that is disposed within the cabin of an aircraft. This wall 212 could be a forward bulkhead, a rear bulkhead, a wall of a monument, or any other wall-type structure within the aircraft cabin. A pocket or recess 214 is formed in the wall 212 and includes a back panel 216. A power switch 224, one or more power sockets or electrical outlets 226, and one or more wire holders 228 may be incorporated by the back panel 216. The wire holder(s) 228 are for wire management and are of a configuration that encompasses clips (e.g., U-shaped; J-shaped), or any appropriate retention structure for retaining a cord, cable, or the like, such as a power cable for a laptop, a tablet, or the like.

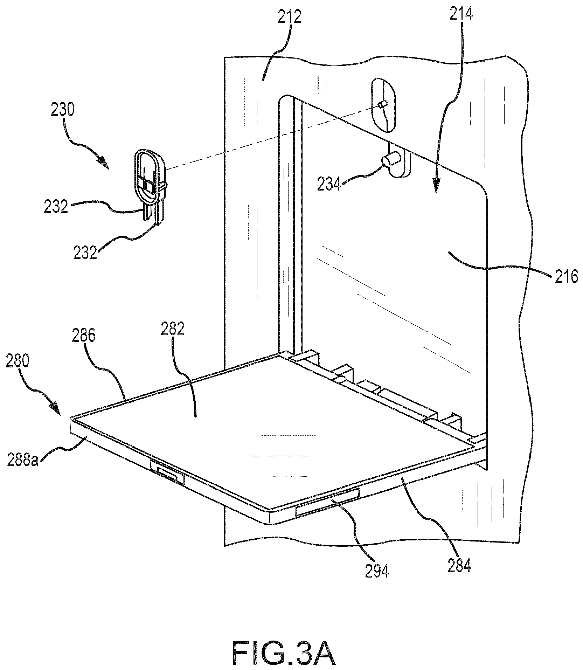

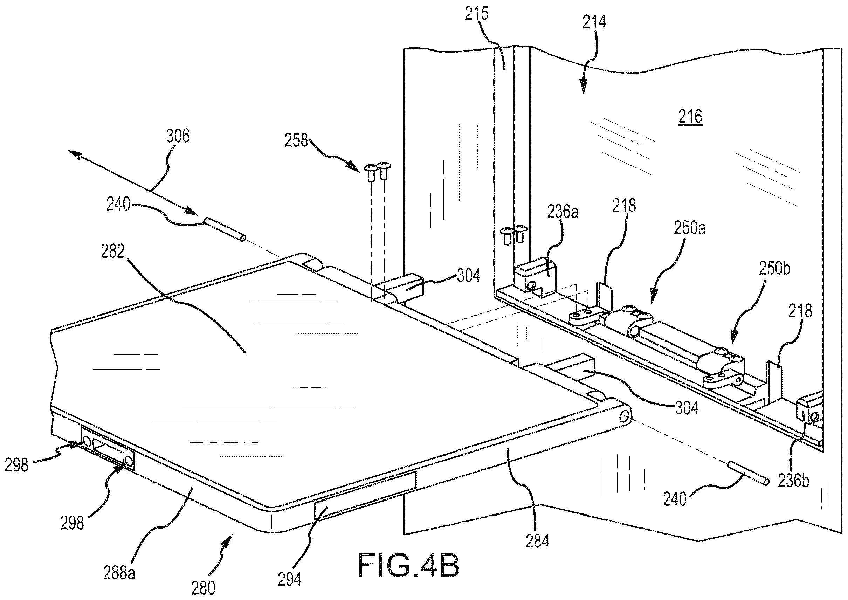

The aircraft workstation 200 may include one or more latches 230 for locking the table 280 in its stowed position (e.g., the right workstation 200 in the view shown in Figure 2). Figure 3A illustrates an enlarged view of the latch 230. The latch 230 may be characterized as a dual latch having a pair of separately actuatable prongs 232. A forward end 288a of the table 280 may include a separate aperture 298 (e.g., Figure 4B) for each of the prongs 232. When the table 280 is disposed in its stowed position, each of the prongs 232 of the latch 230 may be extended for disposition within the corresponding aperture 298 on the forward end 288a of the table 280 to lock the table 280 and its stowed position (i.e., to dispose the latch 230 in a locked configuration). When the latch 230 is disposed in an unlocked configuration, a push pin 234 may at least initiate movement of the table 280 toward its deployed position. The push pin 234 may include a spring that biases the push pin 234 to exert a force on the table 280 that biases the same toward its deployed position.

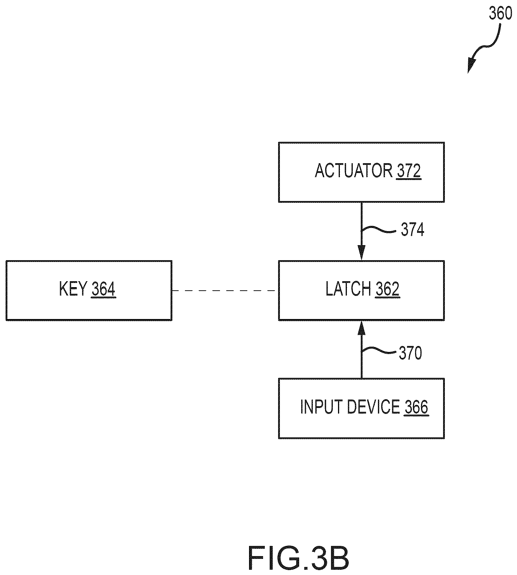

The latch 230 may be configured such that only an authorized user may change the latch 230 from its locked configuration to its unlocked configuration. Figure 3B illustrates a number of options for changing the latch 230 from its locked configuration to its unlocked configuration. A latch system 360 is shown in Figure 3B and includes a latch 362 (e.g., latch 230) that is disposable in each of a locked configuration and an unlocked configuration. One option for disposing the latch 362 in its unlocked configuration is to use a physical key 364. Aircraft personnel could retain possession of this key 364 to unlock the latch 362 such that the corresponding workstation could thereafter be used by a passenger that has paid an appropriate fee for use of the workstation (or aircraft personnel could provide a passenger with the key 364 upon payment of the relevant fee). Another option would be to include an input device 366 that is operatively interconnected with the latch 362 by an appropriate communication link 370. A code could be entered through the input device 366 (e.g., a keypad) to dispose the latch 362 in its unlocked configuration (the code could be entered by aircraft personnel or by a passenger that has paid an appropriate fee for use of the workstation). The input device 366 could also be in the form of a credit card reader that an individual could use to dispose the latch 362 in its unlocked configuration for subsequent use of the corresponding workstation. Yet another option would be to operatively interconnect a remotely located actuator 372 with the latch 362 (e.g., via a communication link 374) such that aircraft personnel could actuate the actuator 372 at a remote location to dispose the latch 362 in its unlocked configuration for use of the corresponding workstation by an aircraft passenger that has paid an appropriate fee.

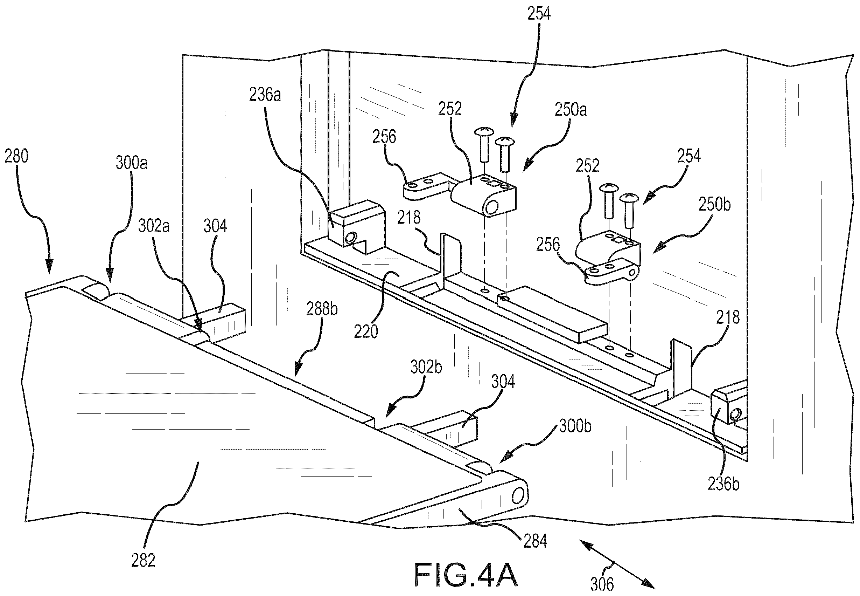

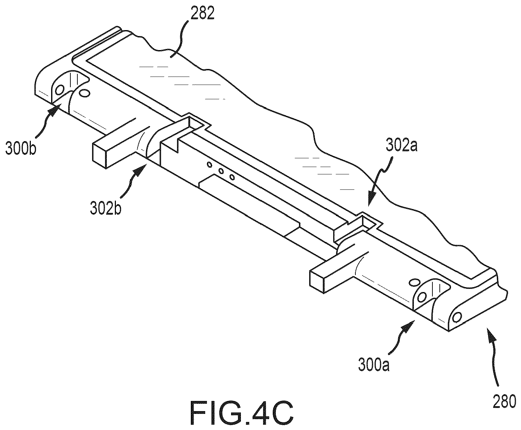

Figures 4A, 4B, and 4C illustrate an interconnection between the table 280 and the wall assembly 210 that allows the table 280 to move between the stowed position and the deployed position that are each shown in Figure 2. The table 280 includes an upper surface 282, the above-noted forward end 288a, a rear end 288b, a first side 284, and a second side 286. The first side 284 and the second side 286 that are spaced from one another in a first dimension 306 (e.g., a width dimension for the table 280), while the forward end 288a and rear end 288b are spaced in a dimension that is orthogonal to the first dimension 306 (e.g., a length dimension for the table 280).

The table 280 includes a pair of recesses 300a, 300b in its upper surface 282 that are located at/toward its rear end 288b and that are spaced in the first dimension 306, along with a pair of recesses 302a, 302b in its upper surface 282 that are located at/toward its rear end 288b and that are also spaced in the first dimension 306. Each of the recesses 302a, 302b is located between the pair of recesses 300a, 300b in the first dimension 306.

The aircraft workstation 200 includes a pair of wall mounts 236a, 236b that may be attached to the back panel 216 of the wall assembly 210, to a lower sidewall 220 that extends from the wall 212 to the back panel 216 (and that defines a depth of the pocket 214, along with left and right sidewalls 215), or both. The wall mounts 236a, 236b are spaced in the first dimension 306. A separate bore extends through each of the wall mounts 236a, 236b. The wall mount 236a is disposed in the recess 300a of the table 280, while the wall mount 236b is disposed in the recess 300b of the table 280. One pivot pin 240 extends through the wall mount 236a and into a corresponding aperture in the table 280 on both sides of the wall mount 236a. Similarly, the other pivot pin 240 extends through the wall mount 236b and into a corresponding aperture in the table 280 on both sides of the wall mount 236b. The pivot pins 240 are aligned in the first dimension 306 and define an axis about which the table 280 pivots relative to the wall assembly 210.

The aircraft workstation 200 further includes a pair of torque hinges 250a, 250b that further movably interconnect the table 280 with the wall assembly 210. Each torque hinge 250a, 250b includes a first section 252 that is secured to the wall assembly 210 (the lower sidewall 220 in Figures 4A and 4B) by one or more fasteners 254, along with a second section 256 that is secured to the table 280 by one or more fasteners 258. The second section 256 is movable relative to its corresponding first section 252 for each of the torque hinges 250a, 250b. The second section 256 of the torque hinge 250a is disposed within the recess 302a of the table 280, while the second section 256 of the torque hinge 250b is disposed in the recess 302b of the table 280. Each torque hinge 250a, 250b exerts a biasing force on its corresponding second section 256 to resist movement of the table 280 to its deployed position. That is, the torque hinges 250a, 250b may be used to pivot the table 280 to its deployed position at a controlled rate (e.g., at a rate that is slower than would be provided by gravitational forces alone).

A pair of rear legs or supports 304 extend from the rear end 288b of the table 280. In this regard, a pair of apertures 218 extend through the back panel 216 of the wall assembly 210. The lower sidewall 220 of the wall assembly 210 may also includes a corresponding recess that intersects a corresponding one of the apertures 218 to accommodate movement of the table 280 relative to the wall assembly 210. In the deployed position for the table 280, the rear legs 304 of the table 280 extend completely through the corresponding aperture 218 in the back panel 216.

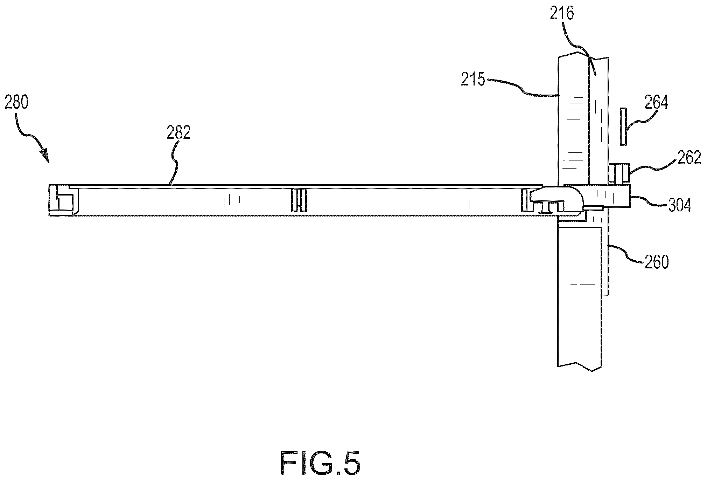

A back plate 260 may be attached to the backside of the back panel 216 (Figure 5). At least one support 262 is fixed relative to this back plate 260 at a location that is above the corresponding rear leg 304 of the table 280 when the table 280 is in its deployed position. A set pin 264 (e.g., a threaded fastener) may extend through a corresponding support 262 and engage the upper surface of the rear leg 304 when the table 280 is in its deployed position. This may be used to enhance the stability of the table 280 in its deployed position, as the set pins 264 exerts a downward force on the table 280 in its deployed (via engagement with the corresponding support 304) that generates a moment that is opposite to that of the moment exerted on the table 280 by the laptop 270 (or by a user "pushing down" on the table 280) - the set pins 264 and the laptop 270 are on opposite sides of the pivotal axis for the table 280. Moreover, the amount that the set pins 264 extend past their corresponding support 262 may be used to adjust the angle of the table 280 when in its deployed position.

The table 280 may include one or more features to enhance a workstation in accordance with this disclosure. The upper surface 282 of the table 280 may be textured (e.g., to provide anti-slip functionality) and may also include for magnetic charging of electronic devices (e.g., mobile phones). In this regard, the table 280 may be in the form of a frame with an insert disposed thereon and that includes the upper surface 282. The table 280 may include a mouse extender 294 that is movably connected with the table 280 (e.g., slidably) and that may be moved from a stowed position (Figures 2, 3, and 4B) to a deployed position (e.g., where it extends beyond the first side 284 of the table 280). The mouse extender 294 may be used to accommodate use of a mouse or the like with the laptop 270. A user may push on the mouse extender 294 to "unlock" the mouse extender 294 to change the same from its stowed position to its deployed position. Similarly, a user may push on the mouse extender 294 to move the mouse extender 294 from its deployed position back to its stowed position.

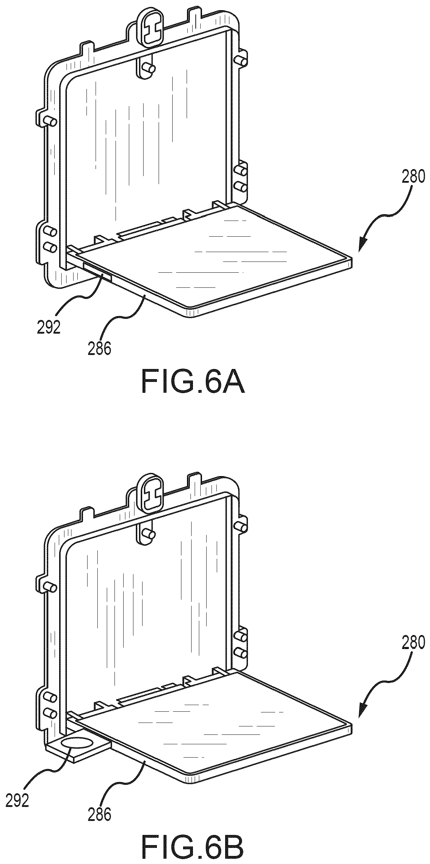

Figures 6A and 6B illustrate that the table 280 may include a cupholder 292 that is movably connected with the table 280 (e.g., slidably) and that may be moved from a stowed position (Figure 6A) to a deployed position (Figure 6B; e.g., where it extends beyond the second side 286 of the table 280). A user may push on the cupholder 292 to "unlock" the cupholder 292 to change the same from its stowed position to its deployed position. Similarly, a user may push on the cupholder 292 to move the cupholder 292 from its deployed position back to its stowed position.

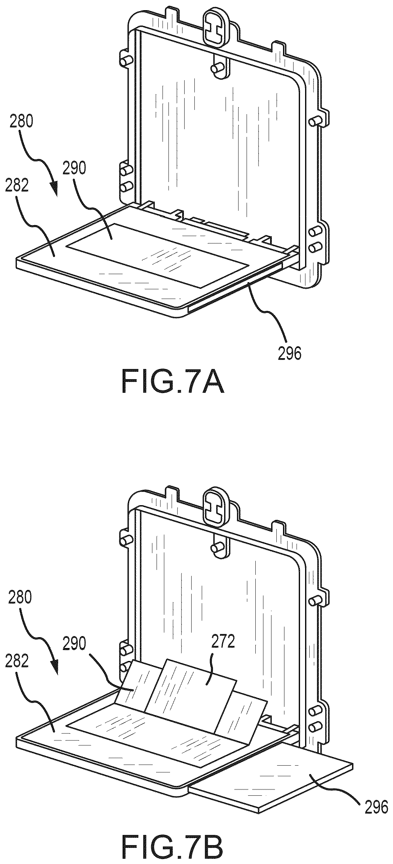

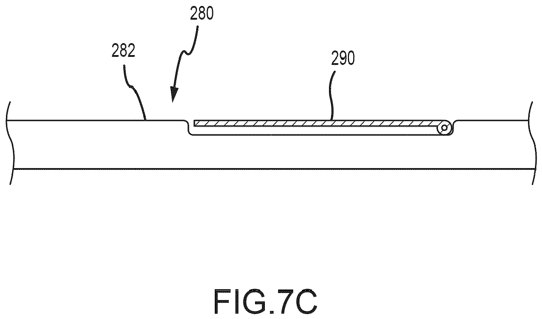

Figures 7A, 7B, and 7C illustrate that the table 280 may include a stand 290, a table extender 296, or both, where each would be movably connected with the table 280 and that each may be moved from a stowed position (Figure 7A) to a deployed position (Figure 7B). The stand 290 may be disposed at least substantially flush with the upper surface 282 of the table 280 when the stand 290 is in its stowed position (Figures 7A and 7C). The stand 290 may be disposed at an angle relative to the upper surface 282 of the table 280 when the stand 290 is in its deployed position (Figure 7B). The stand 290 could be pivotally interconnected with the table 280, could be disposed in any number of different inclined positions relative to the table 280 for its deployed position, or both. A device 272 (e.g., a mobile phone, a tablet computer, or the like) could disposed "on edge" on the table 280 and could be supported in an inclined or upright position by the stand 290 when in its deployed position. The table extender 296 may be slidably interconnected with the table 280 for movement between its stowed position of Figure 7A to its deployed position of Figure 7B (e.g., where it extends beyond the first side 284 of the table 280). The table extender 296 may be of a size to increase the size of the working surface, and may be used in place of the above-described mouse extender 294. A user may push on the table extender 296 to "unlock" the table extender 296 to change the same from its stowed position to its deployed position. Similarly, a user may push on the table extender 296 to move the table extender 296 from its deployed position back to its stowed position.

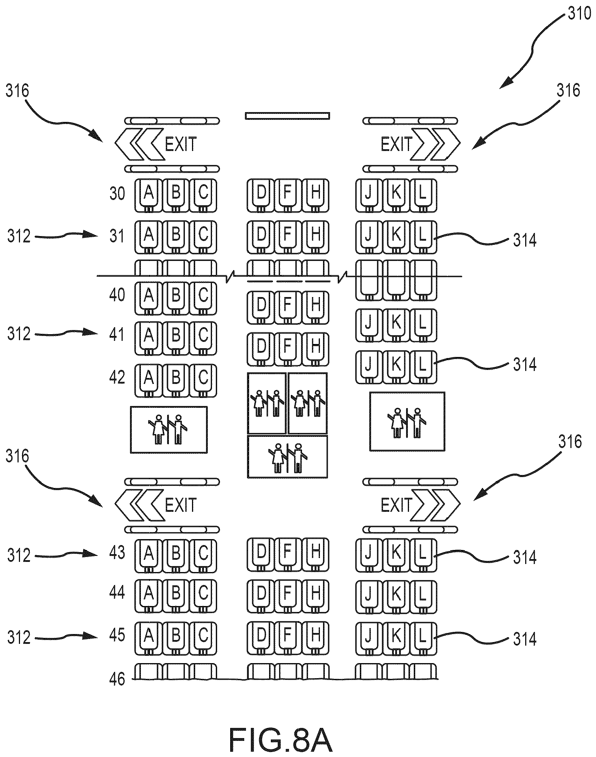

The aircraft workstations described herein may be disposed at a number of different locations within an aircraft. Figure 8A illustrates a schematic of at least a portion of an aircraft cabin 310 having a plurality of rows 312 of one or more passenger seats 314. The aircraft cabin 310 includes four different exit rows 316 for exiting the aircraft - two on each side of the aircraft. The above-described workstations may be mounted to a wall that defines a boundary for an exit row 316 such that the table 280 will extend into the corresponding exit row 316 when in its deployed position.

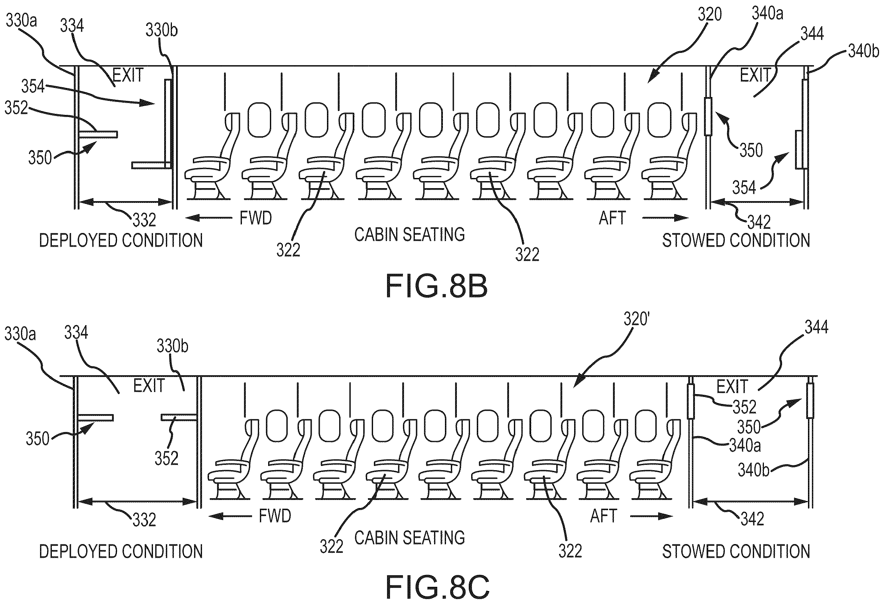

Figure 8B illustrates a schematic of at least a portion of an aircraft cabin 320 having a plurality of passenger seats 322, with each passenger seat 322 that is illustrated in Figure 8B being disposed in a different row in the aircraft cabin 320. A pair of first walls 330a, 330b are spaced from one another (e.g., along a length dimension of the aircraft cabin 320) and define a first exit row 332. The first exit row 332 includes a first exit door 334 for exiting the aircraft cabin 320. A workstation 350 in accordance with the foregoing is incorporated by one of the first walls 330a, 330b, while a jump seat 354 is incorporated by the other of the first walls 330a, 330b. The workstation 350 and the jump seat 354 within the first exit row 332 are each disposed in their respective deployed positions (the table 352 extending into the first exit row 332). The workstation 350 is incorporated so as to position its corresponding table 352 at a height to accommodate a seated user. As such, a user may utilize the workstation 350 while sitting in the jump seat 354.

Figure 8B also illustrates a pair of second walls 340a, 340b that are spaced from one another (e.g., along a length dimension of the aircraft cabin 320) and define a second exit row 342 (e.g., aft of the first exit row 332). The second exit row 342 includes a second exit door 344 for exiting the aircraft cabin 320. A workstation 350 in accordance with the foregoing is incorporated by one of the second walls 340a, 340b, while a jump seat 354 is incorporated by the other of the second walls 340a, 340b. The workstation 350 and the jump seat 354 within the second exit row 342 are each disposed in their respective stowed positions.

Figure 8C illustrates a schematic of a variation of the aircraft cabin 320 of Figure 8B, and is thus identified as aircraft cabin 320'. The first exit row 332 in the case of the aircraft cabin 320' (Figure 8C) may be larger than the first exit row 332 in the case of the aircraft cabin 320 (Figure 8B). The first exit door 334 in the case of the aircraft cabin 320' (Figure 8C) may be larger than the first exit door 334 in the case of the cabin 320 (Figure 8B). In any case, a workstation 350 in accordance with the foregoing is incorporated by each of the first walls 330a, 330b in the first exit row 332 for the aircraft cabin 320' of Figure 8C (the tables 352 each being in the deployed position and extending into the first exit row 332 of the aircraft cabin 320'). Moreover, the workstations 350 are incorporated by each of the first walls 330a, 330b in the first exit row 332 for the aircraft cabin 320' of Figure 8C so as to position their corresponding table 352 at a height to accommodate a standing user.

Similarly and continue to refer to Figure 8C, the second exit row 342 in the case of the aircraft cabin 320' (Figure 8C) may be larger than the second exit row 342 in the case of the aircraft cabin 320 (Figure 8B). The second exit door 344 in the case of the aircraft cabin 320' (Figure 8C) may be larger than the second exit door 344 in the case of the cabin 320 (Figure 8B). In any case, a workstation 350 in accordance with the foregoing is incorporated by each of the second walls 340a, 340b in the second exit row 342 for the aircraft cabin 320' of Figure 8C (the tables 352 each being in their stowed position so as to not extend within second exit row 342 of the aircraft cabin 320'). Moreover, the workstations 350 are incorporated by each of the first walls 340a, 340b in the second exit row 342 for the aircraft cabin 320' of Figure 8C so as to position their corresponding table 352 at a height to accommodate a standing user.

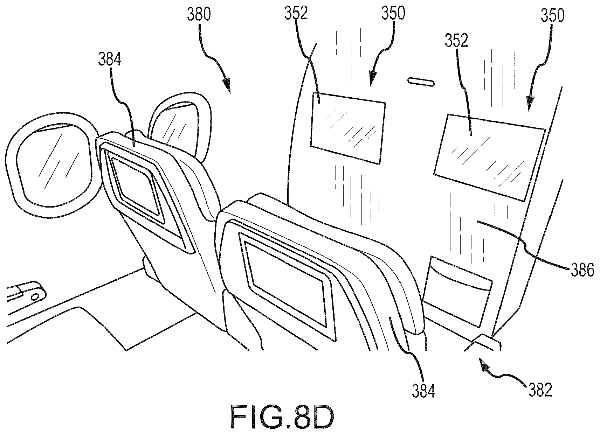

Figure 8D illustrates another integration of the workstations addressed in this disclosure. Figure 8D illustrates a portion of an aircraft cabin 380 having a plurality of passenger seats 384 (two being illustrated in Figure 8D) disposed in a common seat row 382. The seat row 382 may be the first row of a section of the aircraft cabin 380 (e.g., the first row of economy class). A wall 386 (e.g., bulkhead; wall of a monument) is spaced in front of the passenger seats 384 (e.g., along a length dimension of the aircraft cabin 320). A separate workstation 350 in accordance with the foregoing may be incorporated by the wall 386 for each of the passenger seats 384. The workstations 350 disclosed in Figure 8D are in their corresponding stowed position and are positioned at a height to accommodate a standing user.

The workstations addressed in this disclosure may be incorporated by an aircraft to enhance the ability to do work on flights, particularly long haul flights. Moreover, the workstations may be implemented in a manner so as to control use of the same (e.g., by locking the same in the stowed position). A carrier could charge fees for use of such workstations, and as such workstations may be individually unlocked for subsequent use by an aircraft passenger or the like.

Any feature of any other various aspects addressed in this disclosure that is intended to be limited to a "singular" context or the like will be clearly set forth herein by terms such as "only," "single," "limited to," or the like. Merely introducing a feature in accordance with commonly accepted antecedent basis practice does not limit the corresponding feature to the singular. Moreover, any failure to use phrases such as "at least one" also does not limit the corresponding feature to the singular. Use of the phrase "at least substantially," "at least generally," or the like in relation to a particular feature encompasses the corresponding characteristic and insubstantial variations thereof (e.g., indicating that a surface is at least substantially or at least generally flat encompasses the surface actually being flat and insubstantial variations thereof). Finally, a reference of a feature in conjunction with the phrase "in one embodiment" does not limit the use of the feature to a single embodiment.

The foregoing description has been presented for purposes of illustration and description. Furthermore, the description is not intended to limit the invention to the form disclosed herein. Consequently, variations and modifications commensurate with the above teachings, and skill and knowledge of the relevant art, are within the scope of the present disclosure. Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. An aircraft comprising:
a plurality of passenger seat rows (312);
a first exit row (332);
a first border wall assembly for said first exit row (332); and
a table (352) movably interconnected with said first border wall assembly, wherein said table (352) is movable between a deployed position where said table (352) extends into said first exit row (332) and a stowed position.

2. The aircraft of claim 1, wherein said first border wall assembly comprises a pocket, and wherein said table (352) is disposed within said pocket when said table (352) is in said stowed position, and optionally wherein said first border wall assembly comprises at least one of a first power socket disposed within said pocket and at least one wire holder disposed within said pocket.

3. The aircraft of any preceding claim, wherein said first border wall assembly comprises a first power socket, wherein said table (352) is disposed over said first power socket when said table (352) is in said stowed position.

4. The aircraft of any preceding claim, further comprising a latch disposable in each of a locked configuration and an unlocked configuration, said latch requiring at least one of a key and an unlocking signal to change said latch from said locked configuration to said unlocked configuration, wherein said table (352) is movable from said stowed position to said deployed position when said latch is in said unlocked configuration.

5. The aircraft of any preceding claim, further comprising:
a stand movably interconnected with said table (352), wherein said stand is movable from a first stowed position to a first deployed position, wherein said stand is at least substantially coplanar with an upper table surface of said table (352) when in said first stowed position and is disposed at an angle relative to said upper table surface when in said first deployed position.

6. The aircraft of any preceding claim, further comprising:
first and second wall mounts that are spaced in a first dimension and that are fixed relative to said first border wall assembly;
first, second, and third table recesses on an upper table surface of said table (352) that are spaced in said first dimension, wherein said first wall mount is disposed in said first table recess and said second wall mount is disposed in said second table recess;
a first pivot pin that extends in said first dimension through said first wall mount and through portions of said table (352) on each side of said first table recess;
a second pivot pin that extends in said first dimension through said second wall mount and through portions of said table (352) on each side of said second table recess;
a first torque hinge comprising a first wall anchor section interconnected with said first border wall assembly and a first table anchor section disposed in said third table recess, wherein said first torque hinge is located between said first wall mount and said second wall mount in said first dimension; and
a first fastener that extends through said first table anchor section and into said table (352), and optionally further comprising:
a fourth table recess on said upper table surface, wherein said fourth table recess is spaced from each of said first table recess, said second table recess, and said third table recess in said first dimension;
a second torque hinge comprising a second wall anchor section interconnected with said first border wall assembly and a second table anchor section disposed in said fourth table recess, wherein said second torque hinge is located between said first wall mount and said second wall mount in said first dimension; and
a second fastener that extends through said first table anchor section and into said table (352).

7. The aircraft of any preceding claim, wherein said table (352) comprises first and second supports that are spaced in a first dimension, wherein said first support extends through a first aperture in said first border wall assembly and said second support extends through a second aperture in said first border wall assembly, wherein said aircraft further comprises:
a first set pin that is positioned on an opposite side of said first border wall assembly compared to said table (352), wherein said first set pin engages an upper surface of said first support when said table (352) is in said deployed position; and
a second set pin that is positioned on an opposite side of said first border wall assembly compared to said table (352), wherein said second set pin engages an upper surface of said second support when said table (352) is in said deployed position.

8. An aircraft comprising:
a plurality of passenger seat rows;
a first wall assembly;
first and second wall mounts that are spaced in a first dimension and that are fixed relative to said first wall assembly;
a table (352) movably interconnected with said first wall assembly, wherein said table (352) is movable between a stowed position and a deployed position;
first, second, and third table recesses on an upper table surface of said table (352) that are spaced in said first dimension, wherein said first wall mount is disposed in said first table recess and said second wall mount is disposed in said second table recess;
a first pivot pin that extends in said first dimension through said first wall mount and through portions of said table (352) on each side of said first table recess;
a second pivot pin that extends in said first dimension through said second wall mount and through portions of said table (352) on each side of said second table recess;
a first torque hinge comprising a first wall anchor section interconnected with said first wall assembly and a first table anchor section disposed in said third table recess, wherein said first torque hinge is located between said first wall mount and said second wall mount in said first dimension; and
a first fastener that extends through said first table anchor section and into said table.

9. The aircraft of claim 8, further comprising:
a fourth table recess on said upper table surface, wherein said fourth table recess is spaced from each of said first table recess, said second table recess, and said third table recess in said first dimension;
a second torque hinge comprising a second wall anchor section interconnected with said first wall assembly and a second table anchor section disposed in said fourth table recess, wherein said second torque hinge is located between said first wall mount and said second wall mount in said first dimension; and
a second fastener that extends through said first table anchor section and into said table.

10. The aircraft of claim 8 or 9, wherein said first wall assembly comprises a pocket, and wherein said table is disposed within said pocket when said table is in said stowed position, and optionally wherein said first wall assembly comprises at least one of a first power socket disposed within said pocket and at least one wire holder disposed within said pocket.

11. The aircraft of claim 8, 9 or 10, further comprising a latch disposable in each of a locked configuration and an unlocked configuration, said latch requiring at least one of a key and an unlocking signal to change said latch from said locked configuration to said unlocked configuration, wherein said table is movable from said stowed position to said deployed position when said latch is in said unlocked configuration.

12. The aircraft of any of claims 8 to 11, further comprising:
a stand movably interconnected with said table, wherein said stand is movable from a first stowed position to a first deployed position, wherein said stand is at least substantially coplanar with said upper table surface when in said first stowed position and disposed at an angle relative to said upper table surface when in said first deployed position.

13. The aircraft of claim any of claims 8 to 12, wherein said table comprises first and second supports that are spaced in said first dimension, wherein said first support extends through a first aperture in said first wall assembly and said second support extends through a second aperture in said first wall assembly, wherein said aircraft further comprises:
a first set pin that is positioned on an opposite side of said first wall assembly compared to said table, wherein said first set pin engages an upper surface of said first support when said table is in said deployed position; and
a second set pin that is positioned on an opposite side of said first wall assembly compared to said table, wherein said second set pin engages an upper surface of said second support when said table is in said deployed position.

14. A method of operating a workstation on an aircraft, comprising:
unlocking said workstation;
moving a table of said workstation from a stowed position to a deployed position after said unlocking; and
using said table in said deployed position as a working surface.

15. The method of claim 14, wherein said unlocking comprising using at least one of a key and an unlocking signal, and/or wherein said moving comprises moving said table into an exit row of said aircraft, and/or wherein using comprises a user being in one of a sitting position or a standing position.
